# EUROPÄISCHE PATENTSCHRIFT

(11) **EP 3 326 891 B1**
(45) Veröffentlichungstag und Bekanntmachung des Hinweises auf die Patenterteilung: **04.03.2020**
(21) Anmeldenummer: 17200704.9
(22) Anmeldetag: 09.11.2017
(51) Int. Cl.: B62D 15/02, B60W 30/06, G01C 21/26, G08G 1/16

(54) **VERFAHREN ZUR LOKALISIERUNG EINES FAHRZEUGS ENTLANG EINER ROUTE IN EINER PARKPLATZUMGEBUNG**
METHOD FOR LOCATION OF A VEHICLE ALONG A ROUTE IN A PARKING SPACE ENVIRONMENT
PROCÉDÉ DE LOCALISATION D'UN VÉHICULE LE LONG D'UNE ROUTE DANS UN ENVIRONNEMENT DE STATIONNEMENT

(30) Priorität: 21.11.2016 DE 102016122289
(43) Veröffentlichungstag der Anmeldung: 30.05.2018
(73) Patentinhaber: Valeo Schalter und Sensoren GmbH, 74321 Bietigheim-Bissingen (DE)
(72) Erfinder: Joos, Malte, 74321 Bietigheim-Bissingen (DE)
(74) Vertreter: Pothmann, Karsten

(56) Entgegenhaltungen:
- WO-A1-2017/091066
- DE-A1-102014 221 751
- FR-A1- 3 032 410

## Beschreibung

Ein erster Aspekt der Erfindung betrifft ein Verfahren zum Ermitteln einer Position eines Kraftfahrzeugs in einer Parkplatzumgebung, wobei sich das Kraftfahrzeug in der Parkplatzumgebung autonom bewegt. Ein zweiter Aspekt der Erfindung betrifft ein Verfahren zum Führen eines Kraftfahrzeugs in einer Parkplatzumgebung während einer autonomen Fahrt des Kraftfahrzeugs. Ein dritter Aspekt der Erfindung betrifft eine Positionsermittlungsvorrichtung zum Ermitteln einer Position eines Kraftfahrzeugs in einer Parkplatzumgebung.

Um ein Kraftfahrzeug vollautonom, insbesondere ohne Fahrer, in einer Parkplatzumgebung, insbesondere einer Tiefgarage, einen Parkplatz oder einem Parkhaus, ist eine genaue Ermittlung beziehungsweise Bestimmung einer Position des Kraftfahrzeugs nötig. Die Ermittlung der Position beziehungsweise Positionsbestimmung wird häufig über ein GPS-Signal realisiert. Das GPS-Signal ist in Parkplatzumgebungen, besonders in Tiefgaragen und/oder Parkhäusern, häufig nicht verfügbar. Um dennoch eine genaue Positionsbestimmung zu ermöglichen, kann das Kraftfahrzeug mit einer aufwendigen Sensorik ausgestattet sein. Diese Sensorik muss insbesondere in jedem Kraftfahrzeug, welches innerhalb der Parkplatzumgebung manövriert werden soll beziehungsweise innerhalb der Parkplatzumgebung eine autonome Fahrt, insbesondere eine vollautonome Fahrt, durchführen soll, verbaut sein.

Die DE 10 2014 221 751 A1 offenbart ein Verfahren zum Führen eines Kraftfahrzeugs in einer Parkplatzumgebung, wobei eine Route für die autonome Fahrt des Kraftfahrzeugs in der Parkplatzumgebung fahrzeugextern ermittelt wird. Die Route wird dem Kraftfahrzeug zumindest teilweise über ein Kommunikationsnetzwerk gesendet, und das Kraftfahrzeug beim Abfahren der Route auf eine Abweichung beim autonomen Abfahren der Route überwacht wird.

Die DE 10 2012 016 800 A1 offenbart ein Verfahren zur Ermittlung einer Fahrzeugposition eines zu lokalisierenden Kraftfahrzeugs innerhalb eines vorgegebenen Fahrbereichs in einer kartierten Umgebung, beispielsweise einer Parkplatzumgebung. Die Position des Kraftfahrzeugs wird durch die Auswertung von Positionsdaten mindestens einer vorbestimmten Komponente des Kraftfahrzeugs bestimmt, wobei die Positionsdaten durch eine innerhalb der kartierten Umgebung fest angeordnete Sensoreinrichtung bereitgestellt werden. FR3032410A1 offenbart ein Verfahren nach dem Oberbegriff des Anspruchs 1.

Der Stand der Technik besitzt den Nachteil, dass für eine genaue Ermittlung einer Position eines Kraftfahrzeugs stets aufwendige Sensorik nötig ist.

Es ist Aufgabe der vorliegenden Erfindung, eine Position eines Kraftfahrzeugs ohne aufwendige Sensorik genau zu ermitteln.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Das erfindungsgemäße Verfahren zum Ermitteln einer Position eines Kraftfahrzeugs in einer Parkplatzumgebung sieht vor, dass die Position des Kraftfahrzeugs durch Erfassen eines Abstandes des Kraftfahrzeugs von einem Fixpunkt der Parkplatzumgebung ermittelt wird. Das Kraftfahrzeug folgt einer fest vorgegebenen Route in der Parkplatzumgebung, insbesondere im Rahmen einer autonomen Fahrt, vorzugsweise im Rahmen einer vollautonomen Fahrt ohne einen Fahrer. Beispielsweise kann die vorgegebene Route dem Kraftfahrzeug zum Durchführen einer autonomen Fahrt mittels einer Kommunikationseinrichtung der Parkplatzumgebung übermittelt werden. Ein Abstand des Kraftfahrzeugs von einem ersten Fixpunkt der Parkplatzumgebung wird durch einen Sensor der Parkplatzumgebung erfasst. Insbesondere ist dem Fixpunkt ein Sensor zur Messung des Abstandes des Kraftfahrzeugs von dem ersten Fixpunkt zugeordnet. Durch die fest vorgegebene Route und dem Abstand des Kraftfahrzeugs von dem ersten Fixpunkt kann die Position des Kraftfahrzeugs eindeutig bestimmt sein. Demensprechend kann die Position des Kraftfahrzeugs in der Parkplatzumgebung in einem nächsten Schritt aus der vorgegebenen Route sowie dem Abstand des Kraftfahrzeugs von dem ersten Fixpunkt ermittelt werden. Aufgrund der dem Kraftfahrzeug fest vorgegebenen Route, welche bekannt ist, kann die Position des Kraftfahrzeugs somit mit einer einfachen Abstandsmessung ermittelt werden. Auf diese Weise kann die Position des Kraftfahrzeugs ohne aufwendige Sensorik, insbesondere am Fahrzeug, genau ermittelt werden.

In der Erfindung weist die Parkplatzumgebung eine erste Fahrbahnmarkierung auf, welcher das Kraftfahrzeug folgt. Insbesondere ist die fest vorgegebene Route in der Parkplatzumgebung zumindest teilweise mittels der ersten Fahrbahnmarkierung vorgegeben. Insbesondere erfasst das Kraftfahrzeug die erste Fahrbahnmarkierung, um dieser zu folgen. Vorzugsweise folgt das Kraftfahrzeug der ersten Fahrbahnmarkierung autonom, vorzugsweise vollautonom. Dadurch, dass das Kraftfahrzeug der ersten Fahrbahnmarkierung folgt, kann eine besonders sichere und genaue Fahrt des Kraftfahrzeugs entlang der fest vorgegebenen Route ermöglicht sein.

In weiterer Ausgestaltung der Erfindung ist vorgesehen, dass durch die erste Fahrbahnmarkierung eine erste Fahrtrichtung und durch eine zweite Fahrbahnmarkierung eine zweite Fahrtrichtung mit von der ersten Fahrtrichtung unterschiedlicher Richtung definiert ist, wobei die erste Fahrbahnmarkierung und die zweite Fahrbahnmarkierung durch das Kraftfahrzeug nacheinander abgefahren werden. Beispielsweise folgt das Kraftfahrzeug, insbesondere im Rahmen der fest vorgegebenen Route, zuerst der ersten Fahrbahnmarkierung in der ersten Fahrtrichtung und anschließend der zweiten Fahrbahnmarkierung in der zweiten Fahrtrichtung, wobei sich die erste Fahrtrichtung und die zweite Fahrtrichtung unterscheiden. Auf diese Weise ist eine Ermittlung der Position des Kraftfahrzeugs auch entlang unterschiedlicher Fahrtrichtungen ermöglicht.

In einer Weiterbildung ist vorgesehen, dass während das Kraftfahrzeug der ersten Fahrbahnmarkierung folgt, der Abstand des Kraftfahrzeugs zu dem ersten Fixpunkt erfasst wird und während das Kraftfahrzeug der zweiten Fahrbahnmarkierung folgt, der Abstand des Kraftfahrzeugs zu weiteren ersten Fixpunkt erfasst wird. Jeder der Fahrbahnmarkierungen kann beispielsweise ein eigener erster Fixpunkt mit einem eigenen Sensor zugeordnet werden. Dies ermöglicht die Lokalisierung des Kraftfahrzeugs auch in verwinkelten Parkplatzumgebungen.

In einer Ausführungsform der Erfindung ist vorgesehen, dass mittels einer Steuereinheit der Parkplatzumgebung entschieden wird, welcher von mehreren möglichen Fahrbahnmarkierungen das Kraftfahrzeug beim Befahren der Route folgt. Beispielsweise können sich mehrere Fahrbahnmarkierungen kreuzen und/oder eine Fahrbahnmarkierung abzweigen. Dann kann mittels der Steuereinheit der Parkplatzumgebung entschieden werden, welcher Fahrbahnmarkierung das Kraftfahrzeug folgt. Auf diese Weise ist auch bei Abzweigungen von Fahrbahnmarkierungen sichergestellt, dass das Kraftfahrzeug der vorgegebenen und bekannten Route folgt.

In einer Ausführungsform der Erfindung ist vorgesehen, dass das Kraftfahrzeug die erste Fahrbahnmarkierung, welche an einem Untergrund und/oder an einer Decke der Parkplatzumgebung angebracht ist, erfasst. Die erste Fahrbahnmarkierung kann demnach an einer Decke und/oder an einem Untergrund der Parkplatzumgebung angebracht sein und von einem Sensor des Kraftfahrzeugs erfasst werden. Beispielsweise ist die erste Fahrbahnmarkierung an dem Untergrund und/oder der Decke der Parkplatzumgebung aufgemalt. Die erste Fahrbahnmarkierung kann dann beispielsweise mittels einer Kamera des Kraftfahrzeugs erfasst werden. In einem anderen Beispiel ist die Fahrbahnmarkierung durch einen magnetischen Induktor im Untergrund und/oder an der Decke der Parkplatzumgebung bereitgestellt, welcher beispielsweise durch einen Hallsensor des Kraftfahrzeugs erfasst wird. Dadurch kann das Kraftfahrzeug der durch die erste Fahrbahnmarkierung vorgegebenen Route besonders genau folgen.

In weiterer Ausgestaltung der Erfindung ist vorgesehen, dass das Kraftfahrzeug einen zweiten Fixpunkt der Parkplatzumgebung als Zielpunkt erfasst und autonom auf diesen zufährt. Insbesondere wird der Zielpunkt durch den Sensor des Kraftfahrzeugs erfasst. Die vorgegebene Route kann in diesem Fall durch eine gedachte Linie zwischen dem Kraftfahrzeug und dem zweiten Fixpunkt vorgegeben sein. Insbesondere ist in diesem Fall eine genaue Definition eines Startpunktes der vorgegebenen Route nötig. Dem zweiten Fixpunkt kann eine Lasereinheit zugeordnet sein, deren Laserstrahl das Kraftfahrzeug erfasst. Alternativ oder stattdessen kann dem zweiten Fixpunkt ein elektromagnetischer Sender zugeordnet sein, dessen ausgesendete elektromagnetische Wellen durch das Kraftfahrzeug erfasst werden. In diesem Ausführungsbeispiel kann die Route auf einfache Art und Weise durch Anordnen eines oder mehrerer zweiter Fixpunkte in der Parkplatzumgebung vorgegeben werden.

Insbesondere kann der Sensor des Kraftfahrzeugs zum Erfassen der Fahrbahnmarkierung und/oder Zielpunktes beziehungsweise zweiten Fixpunktes abnehmbar an dem Kraftfahrzeug angeordnet sein. Insbesondere kann der Sensor des Kraftfahrzeugs durch eine Montiereinrichtung der Parkplatzumgebung an dem Kraftfahrzeug angeordnet werden. Dieses Anordnen erfolgt insbesondere an dem Startpunkt der Route. Der Startpunkt kann der Punkt sein, an dem der Fahrer das Kraftfahrzeug für den autonomen Parkvorgang zurücklässt. Beispielsweise montiert die Montiereinrichtung den Sensor des Kraftfahrzeugs an einer dafür vorgesehenen Befestigungseinrichtung des Kraftwagens. Der Sensor des Kraftfahrzeugs kann kabellos, beispielsweise über Bluetooth oder Wifi, oder kabelgebunden mit einer autonomen Steuereinheit des Kraftwagens kommunizieren. Dabei kann der Sensor des Kraftfahrzeugs der autonomen Steuereinheit des Kraftwagens beispielsweise eine Relativposition zu der Fahrbahnmarkierung und/oder Bewegungsbefehle zum Folgen der vorgegebenen Route übermitteln. Die Übermittlung kann mittels eines universellen oder eines proprietären Datenprotokolls erfolgen. Dadurch, dass der Sensor des Kraftfahrzeugs durch die Parkplatzumgebung an dem Kraftfahrzeug angeordnet wird, kann der Sensor für die Parkplatzumgebung spezifisch sein. Außerdem kann das vorliegende Verfahren auch für Kraftfahrzeug ohne jegliche Sensorik oder ohne passende Sensorik durchgeführt werden. Somit ist das Verfahren besonders universell einsetzbar.

In einer Ausführungsform der Erfindung wird der Abstand des Kraftfahrzeugs von dem ersten Fixpunkt durch eine Abstandsmessung auf der Basis einer Lasermessung, einer Lidermessung, einer Radarmessung, oder einer Ultraschallmessung erfasst. Durch eines der genannten Verfahren ist eine besonders einfache und gleichzeitig genaue Erfassung des Abstandes ermöglicht.

Besonders vorteilhafterweise kann ein erfindungsgemäßes Verfahren zum Ermitteln der Position des Kraftfahrzeugs im Rahmen eines Verfahrens zum Führen eines Kraftfahrzeugs in einer Parkplatzumgebung von einem Startpunkt zu einem Zielpunkt entlang einer vorgegebenen Route umfasst sein. Beispielsweise wird das Kraftfahrzeug, insbesondere mittels der Steuereinheit der Parkplatzumgebung, von dem Startpunkt zu dem Zielpunkt geführt, indem dem Kraftfahrzeug eine festgelegte Route vorgegeben wird. Der Startpunkt ist beispielsweise ein Übergabepunkt, an dem ein Fahrer das Kraftfahrzeug für einen autonomen Einparkvorgang auf einem Parkplatz der Parkumgebung zurücklässt. Der Zielpunkt ist insbesondere ein freier Parkplatz der Parkumgebung. Insbesondere umfasst die Parkumgebung von jedem möglichen Startpunkt aus Fahrbahnmarkierungen zu jeden und/oder in die Nähe von jedem möglichen Zielpunkt der Parkplatzumgebung. Mittels der Steuereinheit der Parkplatzumgebung kann insbesondere entschieden werden, welchen möglichen Fahrbahnmarkierungen das Kraftfahrzeug beim Befahren der Route folgt, um zum Zielpunkt zu gelangen.

Ein weiterer Aspekt der Erfindung ist eine Positionsermittlungsvorrichtung zum Ermitteln einer Position eines Kraftfahrzeugs in einer Parkplatzumgebung. Dem Kraftfahrzeug ist eine Route zur Durchführung einer autonomen Fahrt fest vorgegeben. Die Positionsermittlungsvorrichtung umfasst einen Sensor der Parkplatzumgebung zum Erfassen eines Abstandes des Kraftfahrzeugs von einem ersten Fixpunkt der Parkplatzumgebung. Die Positionsermittlungsvorrichtung umfasst außerdem eine Ermittlungseinheit zum Ermitteln der Position des Kraftfahrzeugs in der Parkplatzumgebung aus der vorgegebenen Route und dem Abstand des Kraftfahrzeugs von dem ersten Fixpunkt.

Weitere Merkmale der Erfindung ergeben sich aus den Ansprüchen, den Figuren und der Figurenbeschreibung.

Dabei zeigen:
- Fig. 1: eine schematische Draufsicht auf eine Parkplatzumgebung mit einer Positionsermittlungsvorrichtung zum Ermitteln einer Position eines Kraftfahrzeugs gemäß eines erfindungsgemäßen Verfahrens,
- Fig. 2: eine schematische Darstellung eines Abstandes zwischen dem Kraftfahrzeug von einem ersten Fixpunkt und einer vorgegebenen Route,
- Fig. 3: eine weitere schematische Darstellung eines Abstandes zwischen dem Kraftfahrzeug von einem ersten Fixpunkt und einer vorgegebenen Route, und
- Fig. 4: eine weitere schematische Darstellung eines Abstandes zwischen dem Kraftfahrzeug von einem ersten Fixpunkt und einer vorgegebenen Route.

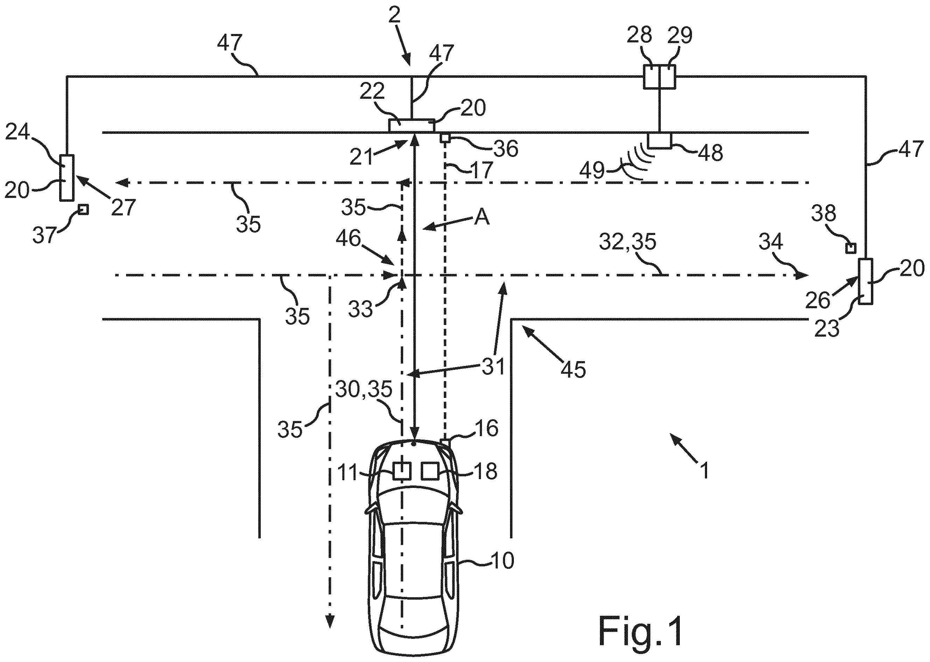

Fig. 1 zeigt in einer schematischen Draufsicht eine Parkplatzumgebung 1 mit einer Positionsermittlungsvorrichtung 2 zum Ermitteln einer Position eines Kraftfahrzeugs 10.

Dem Kraftfahrzeug 10 ist eine Route 31 fest vorgegeben, wobei das Kraftfahrzeug 10 der Route 31 folgt. Die Route 31 kann einen Startpunkt und/oder einen Zielpunkt umfassen und insbesondere von dem Startpunkt zu dem Zielpunkt hinführen. Beispielsweise kann ein Fahrer des Kraftfahrzeugs 10 das Kraftfahrzeug 10 an dem Startpunkt der Route 31 zurücklassen, woraufhin das Kraftfahrzeug 10 autonom auf einem freien Parkplatz der Parkplatzumgebung 1 einparkt. Der Zielpunkt ist insbesondere der freie Parkplatz der Parkplatzumgebung 1.

Die vorgegebene Route 31 kann dem Kraftfahrzeug 10 beispielsweise mittels einer Kommunikationseinrichtung 48 der Parkplatzumgebung 1 übermittelt werden. Insbesondere kann dem Kraftfahrzeug 1 durch die Kommunikationseinheit eine zu fahrende Trajektorie übermittelt werden. Vorliegend in der Fig. 1 wird die Route 31 mittels einer ersten Fahrbahnmarkierung 30 sowie einer zweiten Fahrbahnmarkierung 32 vorgegeben. Das Kraftfahrzeug 10 verfügt vorliegend über einen ersten fahrzeugseitigen Sensor 11, beispielsweise eine Kamera, um die erste Fahrbahnmarkierung 30 sowie die zweite Fahrbahnmarkierung 32 zu erfassen, und der so vergebenen Route 31 zu folgen.

Die Parkplatzumgebung 1 umfasst vorliegend drei zweite Fixpunkte 36, 37, 38 als Zielpunkte, wobei durch die zweiten Fixpunkte 36, 38 die Route 31 vorgegeben wird. Das Kraftfahrzeug 10 verfügt über einen zweiten fahrzeugseitigen Sensor 16, welcher zum Empfang eines Signals 17 des zweiten Fixpunktes 36 ausgebildet ist. Um der Route 31 zu folgen, erfasst der zweite fahrzeugseitige Sensor 16 das Signal 17 des zweiten Fixpunktes 36, woraufhin das Kraftfahrzeug 10 eine autonome Fahrt in Richtung des zweiten Fixpunktes 36 durchführt. Wird diese autonome Fahrt an einem bekannten Startpunkt begonnen, so ist die Route 31 durch den zweiten Fixpunkt 36 ebenfalls eindeutig festgelegt. Der zweite Fixpunkt 36 ist insbesondere als Lasereinheit ausgebildet, welcher einen Laserstrahl als Signal 17 aussendet. Der zweite fahrzeugseitige Sensor 16 kann dann als Fotodiode oder als Kamera ausgebildet sein. Beispielsweise kann der zweite Fixpunkt 36 auch als Antenne ausgebildet sein, wobei als Signal 17 elektromagnetische Wellen ausgesendet werden. Der zweite fahrzeugseitige Sensor 16 kann dann als zweite Antenne ausgebildet sein.

Der erste fahrzeugseitige Sensor 11 und/oder der zweite fahrzeugseitige Sensor 16 können abnehmbar an dem Kraftfahrzeug 10 angeordnet sein. Beispielsweise umfasst die Parkplatzumgebung eine Montiereinrichtung, mittels welcher der erste fahrzeugseitige Sensor 11 und/oder der zweite fahrzeugseitige Sensor 16 an einer, insbesondere genormten, Befestigungseinrichtung des Kraftfahrzeugs 10 montiert werden. Eine Kommunikation des jeweiligen Sensors mit dem ersten fahrzeugseitigen Sensor 11 und/oder dem zweiten fahrzeugseitigen Sensor 16 erfolgt kabellos oder kabelgebunden. Beispielsweise stellt die Befestigungseinrichtung eine Kontaktierung zur Datenübertragung bereit.

Vorliegend ist die Route 31 sowohl durch die erste Fahrbahnmarkierung 30 und die zweite Fahrbahnmarkierung 32 als auch die zweiten Fixpunkte 36, 38 als Zielpunkte festgelegt. In anderen nicht gezeigten Ausführungsformen der Erfindung kann vorgesehen sein, dass die Route 31 entweder durch Fahrbahnmarkierungen 35 oder durch zweite Fixpunkte 36, 37, 38 und/oder auf andere Art und Weise festgelegt ist und das Kraftfahrzeug 10 somit entweder den Fahrbahnmarkierungen 35 oder den zweiten Fixpunkten 36, 37, 38 oder einer auf andere Art und Weise festgelegten Route 31 folgt. Die Bereitstellung der ersten Fahrbahnmarkierung 30 und der zweiten Fahrbahnmarkierung 32 als auch den zweiten Fixpunkte 36, 38 als Zielpunkte ist hierbei redundant und für das vorliegende Verfahren nicht zwingend erforderlich. Demnach ist insbesondere entweder ein erster fahrzeugseitiger Sensor 11 oder ein zweiter fahrzeugseitiger Sensor 12 vorgesehen. Außerdem sind die genannten Beispiele zum Vorgeben der Route 31 beispielhaft zu verstehen.

Die Vorgabe der Route ist auch auf andere Art möglich, beispielsweise durch Übermittlung einer Trajektorie, welche die Route 31 festlegt. Diese Trajektorie kann beispielsweise für den bekannten oder vorgegebenen Startpunkt hin zum Zielpunkt berechnet werden.

Die Parkplatzumgebung 1 umfasst vorliegend drei erste Fixpunkte 21, 26, 27, wobei jedem ersten Fixpunkt 21, 26, 27 ein jeweiliger Sensor 20 der Parkplatzumgebung 1 zugeordnet ist. Die Sensoren 20 der Parkplatzumgebung 1 sind vorliegend als Lasersensoren 22, 23, 24 ausgebildet. Mittels der Sensoren 20 der Parkplatzumgebung 1 kann ein Abstand des Kraftfahrzeugs sehen von dem jeweiligen ersten Fixpunkt 21, 26, 27 erfasst werden. Vorliegend wird der Abstand (A) des Kraftfahrzeugs 10 von dem ersten Fixpunkt 21 erfasst. Die vorliegend als Lasersensoren 20, 23, 24 ausgebildeten Sensoren 20 der Parkplatzumgebung 1 erfassen den Abstand des Kraftfahrzeugs 10 von dem jeweiligen Fixpunkt 21, 26, 27 vorliegend durch Aussenden eines Lasersignals in Richtung des Kraftfahrzeugs 10 und Auswerten von dessen Reflektion. Insbesondere handelt es sich bei den Sensoren 20 um einen handelsübliche optischen Abstandsmesser. In anderen nicht gezeigten Ausführungsformen können die Sensoren 20 der Parkplatzumgebung 1 alternativ oder zusätzlich als Ultraschallsensor, als Radarsensor oder als Lidersensor ausgebildet sein.

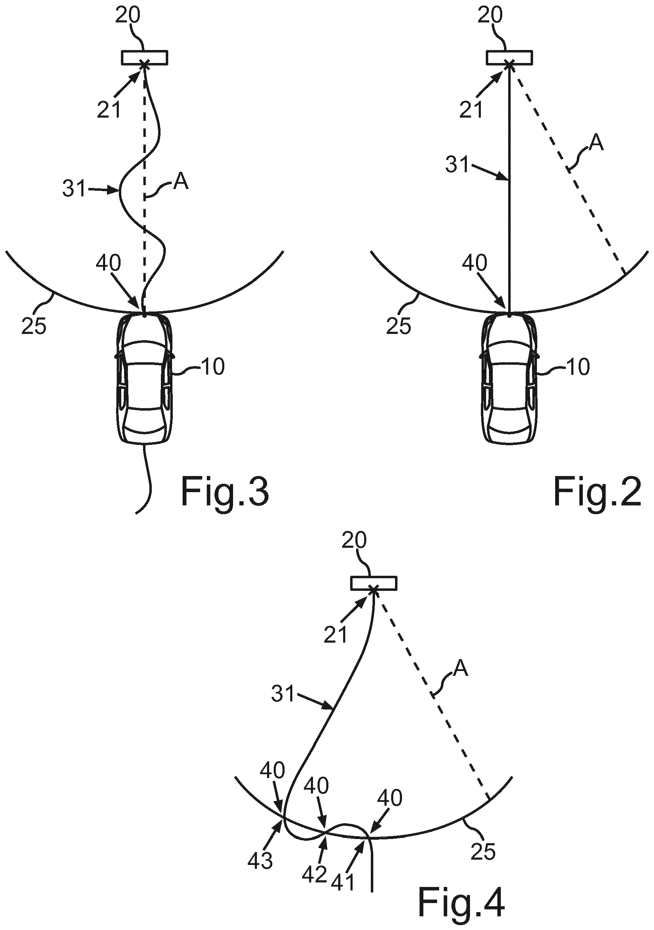

Anhand des Abstandes (A) des Kraftfahrzeugs 10 von dem ersten Fixpunkt 21 sowie der vorgegebenen Route 31, der das Kraftfahrzeug 10 folgt, kann die Position des Kraftfahrzeugs ermittelt werden. In der Fig. 2 und der Fig. 3 ist jeweils in einer schematischen Darstellung gezeigt, wie durch den Abstand (A) des Kraftfahrzeugs 10 von dem ersten Fixpunkt 21 die Position des Kraftfahrzeugs 10 festgelegt ist. Aus dem Abstand (A) ergibt sich ein Kreis 25 um den ersten Fixpunkt 21 mit einem Radius, der dem Abstand (A) entspricht, und auf dem sich das Kraftfahrzeug 10 befindet. Das Kraftfahrzeug 10 folgt der festgelegten Route 31, wodurch außerdem bekannt ist, dass sich das Kraftfahrzeug 10 auf der bekannten Route 31 befindet. Die Position des Kraftfahrzeugs 10 kann somit durch den Schnittpunkt 40 des Kreises 25 mit der vorgegebenen Route 31 festgelegt sein. Somit kann die Position des Kraftfahrzeugs 10 durch eine derartige Auswertung der Route 31 und des Abstandes a leicht ermittelt werden. Dies gilt nicht nur gemäß 2 für eine Route 31, die geradlinig verläuft, sondern auch gemäß Fig. 3 für eine Route 31, die krummlinig verläuft, gelten. Vorzugsweise ist die Route 31 derart zu wählen, dass diese für jeden Abstand (A) des Kraftfahrzeugs 10 von dem ersten Fixpunkt 21 nur einen Schnittpunkt 40 mit dem Kreis 25 aufweist. In diesem Fall kann die Position des Kraftfahrzeugs 10 in jedem Punkt eindeutig ermittelt werden. Insbesondere ist hierfür durch den Fachmann eine geeignete Positionierung des Fixpunktes 1 beziehungsweise- des Sensors 20 der Parkplatzumgebung 1 zu wählen.

Ist die Position des Kraftfahrzeugs 10 für einen oder mehrere Werte des Abstandes (A) nicht eindeutig, da der Kreis 25 mehrere Schnittpunkte 40 mit der vorgegebenen Route 31 aufweist, so kann dennoch durch Auswerten der Veränderung des Abstandes (A) die Position des Kraftfahrzeugs 10 eindeutig bestimmt werden. Gemäß Fig. 4 ist eine Route 31 gezeigt, welche für einen Wert für den Abstand (A) mehrere Schnittpunkte 40 der Route 31 mit dem Kreis 25 aufweist. Ein Schnittpunkt 42 kann beispielsweise dadurch eindeutig erkannt werden, dass sich der Abstand (A) vergrößert, während der Kraftwagen 10 der Route 31 folgt. Die Schnittpunkte 41 und 42 können beispielsweise dadurch eindeutig unterschieden werden, dass die gesamte Fahrt des Kraftfahrzeugs 10 entlang der Route 31 für das Ermitteln der Position des Kraftfahrzeugs 10 herangezogen wird. Beispielsweise kann als Position des Kraftfahrzeugs 10 der Schnittpunkt 43 eindeutig ermittelt werden, wenn bekannt ist, dass das Kraftfahrzeug 10 zuvor den Schnittpunkt 41 und den Schnittpunkt 42 durchlaufen hat.

Die Route 31 gemäß Fig. 1 ist durch die erste Fahrbahnmarkierung 30 und die zweite Fahrbahnmarkierung 32 gebildet, wobei die erste Fahrbahnmarkierung 30 eine erste Fahrtrichtung 33 und durch die zweite Fahrbahnmarkierung 32 eine zweite Fahrtrichtung 34 definiert ist. Das Kraftfahrzeug 10 kann zunächst der ersten Fahrbahnmarkierung 30 und anschließend der zweiten Fahrbahnmarkierung 32 folgen. Vorliegend ist somit ermöglicht, dass das Kraftfahrzeug 10 um eine Ecke 45 der Parkplatzumgebung 1 herumfährt.

Auf einem Teil der Route 31, welcher durch die zweite Fahrbahnmarkierung 32 gebildet ist, kann vorgesehen sein, dass zusätzlich zu dem Abstand (A) oder anstatt des Abstandes (A) des Kraftfahrzeugs 10 von dem ersten Fixpunkt 21 ein Abstand des Kraftfahrzeugs 10 von dem ersten Fixpunkt 26 erfasst wird. Allgemein kann vorgesehen sein, dass verschiedenen Teilen der Route 31 unterschiedliche erste Fixpunkte 21, 26, 27 zugeordnet sind. Die Position des Kraftfahrzeugs 10 in der Parkumgebung 1 kann demnach, während das Kraftfahrzeug 10 der ersten Fahrbahnmarkierung 30 folgt, anhand des Abstandes des Kraftfahrzeugs 10 vom ersten Fixpunkt 21 und, während das Kraftfahrzeug 10 der zweiten Fahrbahnmarkierung 32 folgt durch den Abstand des Kraftfahrzeugs 10 von dem ersten Fixpunkt 26, insbesondere einem weiteren ersten Fixpunkt, ermittelt werden.

Die Parkplatzumgebung 1 umfasst vorliegend noch weitere Fahrbahnmarkierungen 35, wobei durch die Gesamtheit aller Fahrbahnmarkierungen 30, 32, 35 das Kraftfahrzeug 10 durch eine entsprechende Route 31 verschiedene Bereiche, insbesondere jeden Bereich, der Parkplatzumgebung 1 erreichen kann. Insbesondere kann mittels einer Steuereinheit 29, entschieden werden, welcher Fahrbahnmarkierung 30, 32, 35 das Kraftfahrzeug 10 folgt, wenn mehrere Fahrbahnmarkierungen 30, 32, 35 zusammenlaufen.

Vorliegend entscheidet die Steuereinheit 29 beispielsweise in einem Punkt 46, dass das Kraftfahrzeug 10 nach rechts auf die zweite Fahrbahnmarkierung 32 entsprechend der zweiten Fahrtrichtung 34 abbiegt, anstatt geradeaus zu fahren und einer weiteren Fahrbahnmarkierung 35 zu folgen. Hierfür kann eine Kommunikationseinrichtung 48 vorgesehen sein, welche, vorzugsweise über Funk 49, einer korrespondierenden Empfangseinrichtung 18 des Kraftfahrzeugs 10 mitteilt, welcher Fahrbahnmarkierung 30, 32, 35 das Kraftfahrzeug 10 folgen soll. Die Empfangseinrichtung 18 kann alternativ oder zusätzlich mit dem ersten fahrzeugseitigen Sensor 11 und/oder dem zweiten fahrzeugseitigen Sensor 16 kommunizieren. Die Funkverbindung kann jeweils beispielsweise nach Art einer Bluetooth und/oder Wifi-Verbindung erfolgen. Mittels der Kommunikationseinrichtung 48 kann die Trajektorie, welche die Route 31 festlegt, an die Empfangseinrichtung 18 des Kraftfahrzeugs 10 übermittelt werden.

Die verschiedenen Sensoren 20 der Parkplatzumgebung 1 sind vorliegend mittels einer Verbindung 47, insbesondere kabellos oder drahtgebunden, mit einer Recheneinheit 28 verbunden. Die Position des Kraftfahrzeugs 10 kann anhand der vorgegebenen Route 31 sowie dem Abstand (A) mittels der Recheneinheit 28 ermittelt werden. Die Recheneinheit 28 kann demnach zum Auswerten der vorgegebenen Route 31 und dem Abstand (A) sowie zum Ermitteln der Position des Kraftfahrzeugs 10 ausgebildet sein.

Die Lokalisierung des Kraftfahrzeugs 10 wird vorliegend von der Infrastruktur, insbesondere der Positionsermittlungsvorrichtung 2, der Parkplatzumgebung 1, insbesondere einer Tiefgarage oder einem Parkplatz oder einem Parkhaus, durchgeführt. Somit ist insbesondere keine aufwendige Sensorik am Kraftfahrzeug 10 nötig. Insbesondere wird kein GPS- Signal benötigt. Für die Positionsbestimmung beziehungsweise für die Ermittlung der Position kann nur eine einfache, eindimensionale Abstandsmessung durchgeführt werden. Das Ergebnis der Lokalisierung ist insbesondere eindimensional entlang der bekannten Route 31, die insbesondere gerade ist. Um das Kraftfahrzeug 10 von dem Startpunkt der Route 31 zu dem Zielpunkt der Route 31 insbesondere einem freien Parkplatz der Parkplatzeinrichtung 1 zu führen, kann dem Kraftfahrzeug 10 eine entsprechende Route 31 vorgegeben werden. Entlang der Route 31 kann das Kraftfahrzeug 10 während der Fahrt von dem Startpunkt zu dem Zielpunkt stets mittels des Abstandes (A) von dem ersten Fixpunkt 21 ermittelt werden.

Insgesamt zeigt das Ausführungsbeispiel, wie eine genaue Positionsbestimmung eines Kraftfahrzeugs 10 in einer Parkplatzumgebung 1 ohne aufwendige Sensorik möglich ist.

## Patentansprüche

1. Verfahren zum Ermitteln einer Position eines Kraftfahrzeugs (10) in einer Parkplatzumgebung (1), wobei das Kraftfahrzeug (10) einer fest vorgegebenen Route (31) in der Parkplatzumgebung (1) folgt, durch
- Erfassen eines Abstandes (A) des Kraftfahrzeugs (10) von einem ersten Fixpunkt (21) der Parkplatzumgebung (1) durch einen Sensor (20) der Parkplatzumgebung (1),
- Ermitteln der Position des Kraftfahrzeugs (10) in der Parkplatzumgebung (1) aus der vorgegebenen Route (31) und dem Abstand (A) des Kraftfahrzeugs (10) von dem ersten Fixpunkt (21).
**dadurch gekennzeichnet, dass**
die Parkplatzumgebung (1) für die vorgegebene Route (31) eine erste Fahrbahnmarkierung (30) aufweist, welcher das Kraftfahrzeug (10) folgt.

2. Verfahren nach Anspruch 1,
**dadurch gekennzeichnet, dass**
durch die erste Fahrbahnmarkierung (30) eine erste Fahrtrichtung (33) und durch eine zweite Fahrbahnmarkierung (32) eine zweite Fahrtrichtung (34) mit von der ersten Fahrtrichtung (33) unterschiedlicher Richtung definiert ist, wobei für die vorgegebene Route (31) die erste Fahrbahnmarkierung (30) und die zweite Fahrbahnmarkierung (32) durch das Kraftfahrzeug (10) nacheinander abgefahren werden.

3. Verfahren nach Anspruch 2,
**dadurch gekennzeichnet, dass**,
während das Kraftfahrzeug (10) der ersten Fahrbahnmarkierung (30) folgt, der Abstand des Kraftfahrzeugs (10) zu dem ersten Fixpunkt (21) erfasst wird und während das Kraftfahrzeug (10) der zweiten Fahrbahnmarkierung (32) folgt, der Abstand des Kraftfahrzeugs (10) zu einem weiteren ersten Fixpunkt (26) erfasst wird.

4. Verfahren nach einem der vorhergehenden Ansprüche,
**dadurch gekennzeichnet, dass**
mittels einer Steuereinheit (29) der Parkplatzumgebung (1) entschieden wird, welcher von mehreren möglichen Fahrbahnmarkierungen (35) das Kraftfahrzeug (10) beim Befahren der Route (31) folgt.

5. Verfahren nach einem der Ansprüche 1 bis 3,
**dadurch gekennzeichnet, dass**
das Kraftfahrzeug (10) die erste Fahrbahnmarkierung (30), welche an einem Untergrund und/oder einer Decke der Parkplatzumgebung (1) angebracht ist, erfasst.

6. Verfahren nach einem der vorhergehenden Ansprüche,
**dadurch gekennzeichnet, dass**
das Kraftfahrzeug (10) einen zweiten Fixpunkt (35) der Parkplatzumgebung als Zielpunkt erfasst und autonom auf diesen zufährt.

7. Verfahren nach einem der vorhergehenden Ansprüche,
**dadurch gekennzeichnet, dass**
der Abstand (A) des Kraftfahrzeugs (10) von dem ersten Fixpunkt (21) durch eine Abstandsmessung auf der Basis einer Laser-, Lidar-, Radar- oder Ultraschallmessung erfasst wird.

8. Verfahren zum Führen eines Kraftfahrzeugs (10) in einer Parkplatzumgebung (1) von einem Startpunkt zu einem Zielpunkt entlang einer vorgegebenen Route (31), wobei eine Position des Kraftfahrzeugs (1) durch ein Verfahren nach einem der Ansprüche 1 bis 7 ermittelt wird.

9. Positionsermittlungsvorrichtung (2) zum Ermitteln einer Position eines Kraftfahrzeugs (10) in einer Parkplatzumgebung (1), wobei dem Kraftfahrzeug (10) eine fest vorgegebenen Route (31) zur Durchführung einer autonomen Fahrt in der Parkplatzumgebung (1) vorgebbar ist, mit
- einem Sensor (20) der Parkplatzumgebung (1) zum Erfassen eines Abstandes (A) des Kraftfahrzeugs (10) von einem ersten Fixpunkt (21) der Parkplatzumgebung (1) und
- einer Recheneinheit (28) zum Ermitteln der Position des Kraftfahrzeugs (10) in der Parkplatzumgebung (1) aus der vorgegebenen Route (31) und dem Abstand (A) des Kraftfahrzeugs (10) von dem ersten Fixpunkt (21),
wobei die Parkplatzumgebung (1) für die vorgegebene Route (31) eine erste Fahrbahnmarkierung (30) aufweist, welcher das Kraftfahrzeug (10) folgt.

## Claims

1. Method for determining a position of a motor vehicle (10) in a car park environment (1), wherein the motor vehicle (10) follows a firmly prescribed route (31) in the car park environment (1), by
- detecting a distance (A) of the motor vehicle (10) from a first fixed point (21) in the car park environment (1) by means of a sensor (20) of the car park environment (1),
- determining the position of the motor vehicle (10) in the car park environment (1) from the prescribed route (31) and a distance (A) of the motor vehicle (10) from the first fixed point (21),
**characterized in that**
the car park environment (1) has a first road marking (30) for the prescribed route (31), which the motor vehicle (10) follows.

2. Method according to Claim 1,
**characterized in that**
the first road marking (30) defines a first direction of travel (33) and a second road marking (32) defines a second direction of travel (34) having a different direction from the first direction of travel (33), wherein the prescribed route (31) involves the first road marking (30) and the second road marking (32) being travelled along in succession by the motor vehicle (10).

3. Method according to Claim 2,
**characterized in that**
the distance of the motor vehicle (10) from the first fixed point (21) is detected while the motor vehicle (10) is following the first road marking (30) and the distance of the motor vehicle (10) from a further first fixed point (26) is detected while the motor vehicle (10) is following the second road marking (32).

4. Method according to one of the preceding claims,
**characterized in that**
a control unit (29) of the car park environment (1) is used to decide which of multiple possible road markings (35) the motor vehicle (10) follows when using the route (31).

5. Method according to one of Claims 1 to 3,
**characterized in that**
the motor vehicle (10) detects the first road marking (30), which is installed on a floor and/or a ceiling of the car park environment (1).

6. Method according to one of the preceding claims,
**characterized in that**
the motor vehicle (10) detects a second fixed point (35) in the car park environment as destination and autonomously travels towards said destination.

7. Method according to one of the preceding claims,
**characterized in that**
the distance (A) of the motor vehicle (10) from the first fixed point (21) is detected by means of a distance measurement on the basis of a laser, lidar, radar or ultrasound measurement.

8. Method for taking a motor vehicle (10) in a car park environment (1) from a starting point to a destination along a prescribed route (31), wherein a position of the motor vehicle (1) is determined by means of a method according to one of Claims 1 to 7.

9. Position determination apparatus (2) for determining a position of a motor vehicle (10) in a car park environment (1), wherein a firmly prescribed route (31) for making an autonomous journey in the car park environment (1) is prescribable for the motor vehicle (10), having
- a sensor (20) of the car park environment (1) for detecting a distance (A) of the motor vehicle (10) from a first fixed point (21) in the car park environment (1) and
- a computing unit (28) for determining the position of the motor vehicle (10) in the car park environment (1) from the prescribed route (31) and the distance (A) of the motor vehicle (10) from the first fixed point (21),
wherein the car park environment (1) has a first road marking (30) for the prescribed route (31), which the motor vehicle (10) follows.

## Revendications

1. Procédé de détermination d'une position d'un véhicule à moteur (10) dans un environnement de stationnement (1), dans lequel le véhicule à moteur (10) suit un itinéraire prédéterminé fixe (31) dans l'environnement de stationnement (1), par
- détection d'une distance (A) du véhicule à moteur (10) par rapport à un premier point fixe (21) de l'environnement de stationnement (1) au moyen d'un capteur (20) de l'environnement de stationnement (1),
- détermination de la position du véhicule à moteur (10) dans l'environnement de stationnement (1) à partir de l'itinéraire prédéterminé (31) et de la distance (A) du véhicule à moteur (10) par rapport au premier point fixe (21),
**caractérisé en ce que** l'environnement de stationnement (1) comporte, pour le trajet prédéterminé (31), un premier marquage routier (30) que suit le véhicule à moteur (10).

2. Procédé selon la revendication 1,
**caractérisé en ce qu'**une première direction de déplacement (33) est définie par le premier marquage routier (30) et **en ce qu'**une seconde direction de déplacement (34) présentant une direction différente de la première direction de déplacement (33) est définie par un second marquage routier (32), dans lequel le premier marquage routier (30) et le second marquage routier (32) sont parcourus successivement par le véhicule à moteur (10) pour l'itinéraire prédéterminé (31).

3. Procédé selon la revendication 2,
**caractérisé en ce que** la distance du véhicule à moteur (10) par rapport au premier point fixe (21) est détectée pendant que le véhicule à moteur (10) suit le premier marquage routier (30) et **en ce que** la distance du véhicule à moteur (10) par rapport à un autre premier point fixe (26) est détectée pendant que le véhicule à moteur (10) suit le second marquage routier (32).

4. Procédé selon l'une des revendications précédentes,
**caractérisé en ce qu'**une unité de commande (29) de l'environnement de stationnement (1) est utilisée pour décider, parmi une pluralité de marquages routiers possibles (35), celui que le véhicule à moteur (10) suit lorsqu'il parcourt l'itinéraire (31).

5. Procédé selon l'une quelconque des revendications 1 à 3,
**caractérisé en ce que** le véhicule à moteur (10) détecte le premier marquage routier (30) qui est placé sur un sol et/ou un plafond dans l'environnement de stationnement (1).

6. Procédé selon l'une des revendications précédentes,
**caractérisé en ce que** le véhicule à moteur (10) détecte un second point fixe (35) de l'environnement de stationnement en tant que point de destination et s'en approche de manière autonome.

7. Procédé selon l'une des revendications précédentes,
**caractérisé en ce que** la distance (A) du véhicule à moteur (10) par rapport au premier point fixe (21) est détectée par une mesure de distance effectuée sur la base d'une mesure par laser, lidar, radar ou ultrasons.

8. Procédé de conduite d'un véhicule à moteur (10) dans un environnement de stationnement (1) d'un point de départ jusqu'à un point de destination le long d'un itinéraire prédéterminé (31), dans lequel une position du véhicule à moteur (1) est déterminée par un procédé selon l'une des revendications 1 à 7.

9. Dispositif de détermination de position (2) permettant de déterminer une position d'un véhicule à moteur (10) dans un environnement de stationnement (1), dans lequel un itinéraire prédéterminé fixe (31) peut être prédéterminé pour le véhicule à moteur (10) afin d'effectuer un trajet autonome dans l'environnement de stationnement (1), comprenant
- un capteur (20) de l'environnement de stationnement (1) destiné à détecter une distance (A) du véhicule à moteur (10) par rapport à un premier point fixe (21) de l'environnement de stationnement (1) et
- une unité de calcul (28) destinée à déterminer la position du véhicule à moteur (10) dans l'environnement de stationnement (1) à partir de l'itinéraire prédéterminé (31) et de la distance (A) du véhicule à moteur (10) par rapport au premier point fixe (21), dans lequel l'environnement de stationnement (1) comporte un premier marquage routier (30) que le véhicule à moteur (10) suit pour l'itinéraire prédéterminé (31).
